# EUROPÄISCHE PATENTANMELDUNG

(11) **EP 1 059 224 A1**
(43) Veröffentlichungstag der Anmeldung: **13.12.2000**
(21) Anmeldenummer: 00110147.6
(22) Anmeldetag: 11.05.2000
(51) Int. Cl.: B62D 65/18, B61B 10/02

(54) **Fördervorrichtung zum Fördern von Werkstücken, insbesondere Fahrzeugkarosserien**

(30) Priorität: 11.06.1999 DE 19926623
(71) Anmelder: Dürr Systems GmbH, 70435 Stuttgart (DE)
(72) Erfinder: Besinger, Hartwig, 71729 Erdmannhausen (DE); Mogck, Gerhard, 74072 Heilbronn (DE); Schmohl, Andreas, 72636 Frickenhausen (DE)
(74) Vertreter: Hoeger, Stellrecht & Partner

(57) **Zusammenfassung**

Um eine Fördervorrichtung zum Fördern von Werkstücken, insbesondere Fahrzeugkarosserien, durch einen in einer Kabine mit äußeren Begrenzungswänden angeordneten Behandlungsbereich zur Oberflächenbehandlung der Werkstücke, welche einen in der Kabine angeordneten Fördermittelkanal umfaßt, dessen Innenraum durch Begrenzungswände von dem Behandlungsbereich getrennt ist, und einen sich durch den Fördermittelkanal erstreckenden Strang eines Fördermittels, zu schaffen, deren Fördermittelkanal weitgehend ohne Beeinträchtigung der im Behandlungsbereich der Kabine durchgeführten Oberflächenbehandlung der Werkstücke gewartet werden kann, wird vorgeschlagen, daß ein Bereich einer äußeren Begrenzungswand der Kabine eine verschließbare Wartungsöffnung aufweist, durch welche im geöffneten Zustand der Zugang zum Innenraum des Fördermittelkanals von außerhalb der Kabine möglich ist.

## Beschreibung

Die vorliegende Erfindung betrifft eine Fördervorrichtung zum Fördern von Werkstücken, insbesondere Fahrzeugkarosserien, durch einen in einer Kabine mit äußeren Begrenzungswänden angeordneten Behandlungsbereich zur Oberflächenbehandlung der Werkstücke, welche einen in der Kabine angeordneten Fördermittelkanal umfaßt, dessen Innenraum durch Begrenzungswände von dem Behandlungsbereich getrennt ist, und einen sich durch den Fördermittelkanal erstreckenden Strang eines Fördermittels.

Solche Fördervorrichtungen sind aus dem Stand der Technik bekannt.

Bei den bekannten Fördervorrichtungen der eingangs genannten Art ist der mindestens eine Fördermittelkanal im Abstand von den äußeren Begrenzungswänden der Kabine innerhalb der Kabine angeordnet, so daß die Kabine zur Wartung und Reinigung des Fördermittelkanals betreten werden muß. In der Regel müssen hierzu die im Behandlungsbereich der Kabine durchgeführte Oberflächenbehandlung der Werkstücke unterbrochen werden und gegebenenfalls gesundheitsgefährdende Substanzen aus dem Behandlungsbereich entfernt werden.

Der vorliegenden Erfindung liegt daher die Aufgabe zugrunde, eine Fördervorrichtung der eingangs genannten Art zu schaffen, deren Fördermittelkanal weitgehend ohne Beeinträchtigung der im Behandlungsbereich der Kabine durchgeführten Oberflä-chenbehandlung der Werkstücke gewartet werden kann.

Diese Aufgabe wird bei einer Fördervorrichtung mit den Merkmalen des Oberbegriffs von Anspruch 1 erfindungegemäß dadurch gelöst, daß ein Bereich einer äußeren Begrenzungswand der Kabine eine verschließbare Wartungsöffnung aufweist, durch welche im geöffneten Zustand der Zugang zum Innenraum des Fördermittelkanals von außerhalb der Kabine möglich ist.

Das erfindungsgemäße Konzept ermöglicht es, eine Wartung des Fördermittelkanals durchzuführen, ohne den Innenraum der Kabine betreten und hierzu die Oberflächenbehandlung der Werkstücke in dem Behandlungsbereich der Kabine unterbrechen und gesundheitsgefährdende Substanzen aus dem Behandlungsbereich entfernen zu müssen. Hierdurch wird die Wartung des Fördermittelkanals einfacher, schneller, ohne Gesundheitsbeeinträchtigungen der die Wartung durchführenden Bedienungsperson und ohne Unterbrechung oder mit nur kurzzeitiger Unterbrechung der Oberflächenbehandlung im Behandlungsbereich der Kabine ermöglicht.

Grundsätzlich kann die verschließbare Wartungsöffnung in einem beliebigen Bereich einer äußeren Begrenzungswand der Kabine vorgesehen sein.

Bei einer bevorzugten Ausführungsform der erfindungsgemäßen Fördervorrichtung ist jedoch vorgesehen, daß der Bereich der äußeren Begrenzungswand der Kabine ein Bereich einer vertikalen Seitenwand der Kabine ist.

Um zu verhindern, daß in dem Intervall zwischen an dem Fördermittelkanal durchzuführenden Wartungsarbeiten Substanzen durch den Fördermittelkanal aus dem Behandlungsbereich der Kabine in die Umgebung gelangen, ist vorgesehen, daß die Wartungsöffnung mittels eines Wartungsdeckels verschließbar ist.

Grundsätzlich kann der Wartungsdeckel von der Wartungsöffnung abnehmbar ausgebildet sein oder eine Verschiebeeinrichtung zur Verschiebung des Wartungsdeckels aus einer Schließstellung, in welcher der Wartungsdeckel die Wartungsöffnung verschließt, in eine Öffnungstellung, in welcher der Wartungsdeckel die Wartungsöffnung freigibt, vorgesehen sein.

Bei einer bevorzugten Ausgestaltung der erfindungsgemäßen Fördervorrichtung ist jedoch vorgesehen, daß der Wartungsdeckel als schwenkbar gehaltene Wartungsklappe ausgebildet ist.

Um einen unmittelbaren Zugang zum Innenraum des Fördermittelkanals zu ermöglichen, ist vorteilhafterweise vorgesehen, daß der Wartungsdeckel einen Bereich einer Begrenzungswand des Fördermittelkanals umfaßt.

Insbesondere kann vorgesehen sein, daß der Wartungsdeckel einen Bereich einer vertikalen Seitenwand des Fördermittelkanals umfaßt.

Um zu verhindern, daß in einer solchen vertikalen Seitenwand des Fördermittelkanals Wartungsöffnungsränder vorhanden sind, welche abgedichtet werden müßten, ist es günstig, wenn der Wartungsdeckel eine vertikale Seitenwand des Fördermittelkanals als Ganzes umfaßt.

Ferner kann vorgesehen sein, daß der Wartungsdeckel einen einer Durchtrittsöffnung des Fördermittelkanals benachbarten Bereich einer Begrenzungswand des Fördermittelkanals umfaßt.

In diesem Fall können an dem Wartungsdeckel Mittel zum zumindest teilweisen Überdecken der Durchtrittsöffnung angeordnet sein. Dies bietet den Vorteil, daß solche Mittel zum zumindest teilweisen Überdecken der Durchtrittsöffnung nach Abnehmen oder Öffnen des Wartungsdeckels besonders leicht zu reinigen oder auszuwechseln sind.

Bei einer bevorzugten Ausgestaltung der erfindungsgemäßen Fördervorrichtung ist ferner vorgesehen, daß die Wartungsöffnung im geöffneten Zustand den Zugang zu einer unterhalb des Fördermittelkanals angeordneten Schmutzauffangwanne ermöglicht. Dies bietet den Vorteil, daß bei der Wartung des Fördermittelkanals zugleich auch die unter demselben angeordnete Schmutzauffangwanne entleert und gereinigt werden kann.

Insbesondere kann in einem solchen Fall vorgesehen sein, daß ein unterer Rand der Wartungsöffnung zwischen einem unteren Rand des Fördermittelkanals und der Schmutzauffangwanne verläuft.

Für die Herstellung der Kabine ist es besonders günstig, wenn deren äußeren Begrenzungswände möglichst großflächig und glatt ausgebildet sind. Es ist daher günstig, wenn ein sich an die Wartungsöffnung nach oben anschließender Bereich einer äußeren Begrenzungswand der Kabine und ein sich nach unten an die Wartungsöffnung anschließender Bereich der äußeren Begrenzungswand der Kabine im geschlossenen Zustand mit dem Wartungsdeckel fluchten.

Durch diese Maßnahme wird auch die Reinigung der äußeren Begrenzungswand der Kabine von deren Außenseite her erleichtert, da im Bereich der Ränder des Wartungsdeckels keine schwer zugänglichen Ecken oder Rillen vorhanden sind.

Damit an mehreren längs der Förderrichtung voneinander beabstandeten Stellen eine Wartung des Fördermittelkanals durchgeführt werden kann, sind vorteilhafterweise mehrere Wartungsöffnungen vorgesehen, die in einer äußeren Begrenzungswand der Kabine längs der Förderrichtung aufeinanderfolgen.

Um möglichst jede Stelle des Innenraums des Fördermittelkanals gut erreichen zu können, ist es günstig, wenn die mehreren Wartungsöffnungen sich längs der Förderrichtung unmittelbar aneinander anschließen.

Ferner ist es von Vorteil, wenn sich die unmittelbar aneinander anschließenden Wartungsöffnungen längs der Förderrichtung über im wesentlichen die gesamte Länge des Fördermittelkanals erstrecken, so daß eine Wartung an jeder beliebigen Stelle des Innenraums des Fördermittelkanals möglich ist.

Um ein Eindringen von aggressiven chemischen Stoffen aus dem Behandlungsbereich der Kabine in den Innenraum des Fördermittelkanals zu verhindern, ist vorteilhafterweise vorgesehen, daß der Innenraum des Fördermittelkanals mit einem gegenüber dem Luftdruck des Behandlungsbereichs erhöhten Luftdruck beaufschlagbar ist.

Um eine gute Zugänglichkeit der Wartungsöffnung von der Außenseite der Kabine aus zu gewährleisten, ist es günstig, wenn an der Außenseite der Kabine unterhalb der Wartungsöffnung ein begehbarer Wartungssteg angeordnet ist.

Weist die Fördervorrichtung ein mehrsträngiges Fördermittel auf, so umfaßt die Fördervorrichtung vorteilhafterweise mindestens zwei in der Kabine angeordnete Fördermittelkanäle, durch welche sich jeweils ein Strang des Fördermittels erstreckt, wobei mindestens zwei Bereiche der äußeren Begrenzungswände der Kabine jeweils mindestens eine verschließbare Wartungsöffnung aufweisen, durch welche im geöffneten Zustand der Zugang zum Innenraum jeweils eines der Fördermittelkanäle von außerhalb der Kabine möglich ist.

Anspruch 19 ist auf eine Behandlungsvorrichtung zur Oberflächenbehandlung von Werkstücken, insbesondere Fahrzeugkarosserien, gerichtet, welche eine erfindungsgemäße Fördervorrichtung umfaßt.

Weitere Merkmale und Vorteile der Erfindung sind Gegenstand der nachfolgenden Beschreibung und zeichnerischen Darstellung eines Ausführungsbeispiels.

In den Zeichnungen zeigen:
- Fig. 1: eine schematische Seitenansicht einer Fördervorrichtung mit eingangsseitiger Rollenbahn, eingangsseitiger Drehvorrichtung, eingangsseitiger Hubstation, Pendelförderer, ausgangsseitige Hubstation, ausgangsseitiger Drehvorrichtung und ausgangsseitiger Rollenbahn;
- Fig. 2: eine schematische Draufsicht auf die Fördervorrichtung aus Fig. 1;
- Fig. 3: einen schematischen Querschnitt durch eine Kabine der Fördervorrichtung aus den Fig. 1 und 2, durch welche Fahrzeugkarosserien mittels eines zweisträngigen Fördermittels gefördert werden, wobei die beiden Stränge des Fördermittels seitlich neben und oberhalb eines Behandlungsbades angeordnet sind;
- Fig. 4: einen schematischen Querschnitt durch einen Fördermittelkanal des Pendelförderers aus Fig. 3 mit einer Wartungsklappe in geschlossenem Zustand;
- Fig. 5: einen schematischen Querschnitt durch einen Fördermittelkanal des Pendelförderers aus Fig. 3 mit einer Wartungsklappe in geöffnetem Zustand; und
- Fig. 6: eine schematische Seitenansicht der Kabine des Pendelförderers mit an der Kabine angeordneten Wartungsklappen.

Gleiche oder funktional äquivalente Elemente sind in allen Figuren mit denselben Bezugszeichen bezeichnet.

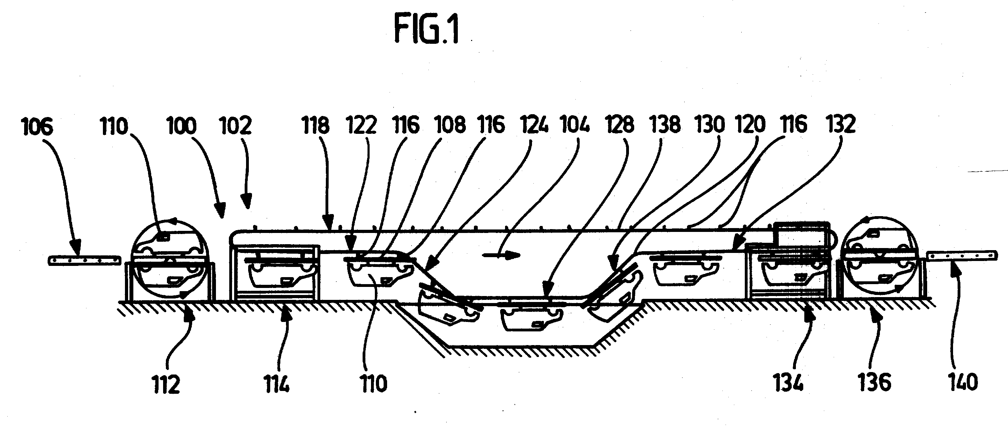

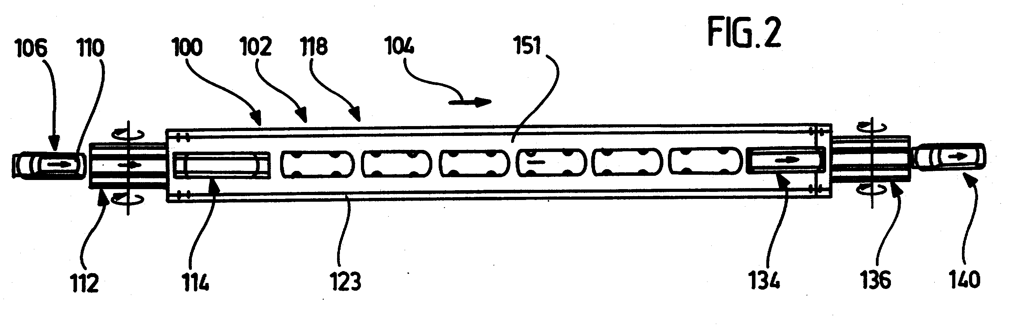

Eine in den Fig. 1 bis 6 dargestellte, als Ganzes mit 100 bezeichnete Behandlungsvorrichtung für Fahrzeugkarosserien umfaßt eine in den Fig. 1 und 2 schematisch dargestellte, als Ganzes mit 102 bezeichnete Fördervorrichtung zum Fördern von Fahrzeugkarosserien.

Die Fördervorrichtung 102 umfaßt, in der Förderrichtung 104 aufeinanderfolgend, folgende Bestandteile: eine eingangsseitige Rollenbahn 106 zum horizontalen Transport von an Skidrahmen 108 angeordneten Fahrzeugkarosserien 110 längs der Förderrichtung 104, das heißt in der Darstellung der Fig. 1 und 2 nach rechts, wobei sich die Fahrzeugkarosserien 110 in einer Standardstellung befinden, in welcher Fensteröffnungen der Fahrzeugkarosserien 110 oberhalb der Bodengruppe der Fahrzeugkarosserien 110 angeordnet sind.

In der Förderrichtung 104 schließt sich an die eingangsseitige Rollenbahn 106 eine eingangsseitige Drehvorrichtung 112 an, welche dazu dient, die Fahrzeugkarosserien 110 durch eine Drehung um 180° in eine Kopfüberstellung zu überführen, in welcher Fensteröffnungen der Fahrzeugkarosserien 110 unterhalb der Bodengruppe der Fahrzeugkarosserien 110 angeordnet sind.

Längs der Förderrichtung 104 schließt sich an die eingangsseitige Drehvorrichtung 112 eine eingangsseitige Hubstation 114 an, in welcher die Skidrahmen 108 mit den daran angeordneten Fahrzeugkarosserien 110 in Pendel 116 eines als Ganzes mit 118 bezeichneten Pendelförderers eingehängt werden. Die Pendel 116 sind auf im folgenden noch näher zu beschreibende Weise mit einem endlos umlaufenden Fördermittel 120 des Pendelförderers 118 verbunden, welches in an sich bekannter und darum hier nicht näher beschriebener Weise angetrieben wird und die Pendel 116 mit den daran eingehängten Skidrahmen 108 längs der Förderrichtung 104 durch eine Kabine 123 (Fig. 2) transportiert.

Wie aus Fig. 1 zu ersehen ist, weist der Pendelförderer 118 einen eingangsseitigen horizontalen Einlaufabschnitt 122 auf, in dem die Fahrzeugkarosserien 110 in Kopfüberstellung horizontal transportiert werden, einen sich daran anschließenden schrägen Eintauchabschnitt 124, in dem die Fahrzeugkarosserien in Kopfüberstellung unter einem Neigungswinkel von ungefähr 45° schräg nach unten in ein Behandlungsbad 126 hinein gefördert werden, einen sich daran anschließenden horizontalen Behandlungsbadabschnitt 128, in dem die Fahrzeugkarosserien 110 in Kopfüberstellung horizontal gefördert werden, einen sich daran anschließenden schrägen Austauchabschnitt 130, in dem die Fahrzeugkarosserien 110 in Kopfüberstellung unter einem Neigungswinkel von ungefähr 45° aus dem Behandlungsbad 126 herausgefördert werden, und einen sich daran anschließenden horizontalen Auslaufabschnitt 132, in dem die Fahrzeugkarosserien 110 in Kopfüberstellung horizontal zu einer ausgangsseitigen Hubstation 134 gefördert werden.

In der ausgangsseitigen Hubstation 134 werden die Skidrahmen 108 mit den daran angeordneten Fahrzeugkarosserien 110 aus den Pendeln 116 des Pendelförderers 118 herausgehoben und anschließend in der Förderrichtung 104 in eine ausgangsseitige Drehvorrichtung 136 gefördert.

Die leeren Pendel 116 werden von einem Rücklauftrum 138 des Fördermittels 120 zur eingangsseitigen Hubstation 114 zurücktransportiert.

Die in die ausgangsseitige Drehvorrichtung 136 geförderten Fahrzeugkarosserien 100 werden in derselben durch Drehung um 180° aus der Kopfüberstellung in die Standardstellung, in welcher Fensteröffnungen der Fahrzeugkarosserien 110 oberhalb der Bodengruppe der Fahrzeugkarosserien 110 angeordnet sind, zurück überführt.

Anschließend werden die Fahrzeugkarosserien 110 in der Standardstellung aus der ausgangsseitigen Drehvorrichtung 136 in der Förderrichtung 104 zu einer ausgangsseitigen Rollenbahn 140 gefördert. Die ausgangsseitige Rollenbahn 140 bringt die Fahrzeugkarosserien 110 in der Standardstellung zu einer (nicht dargestellten) weiteren Behandlungsvorrichtung, in der der nächste Behandlungsschritt an den Fahrzeugkarosserien 110 durchgeführt wird.

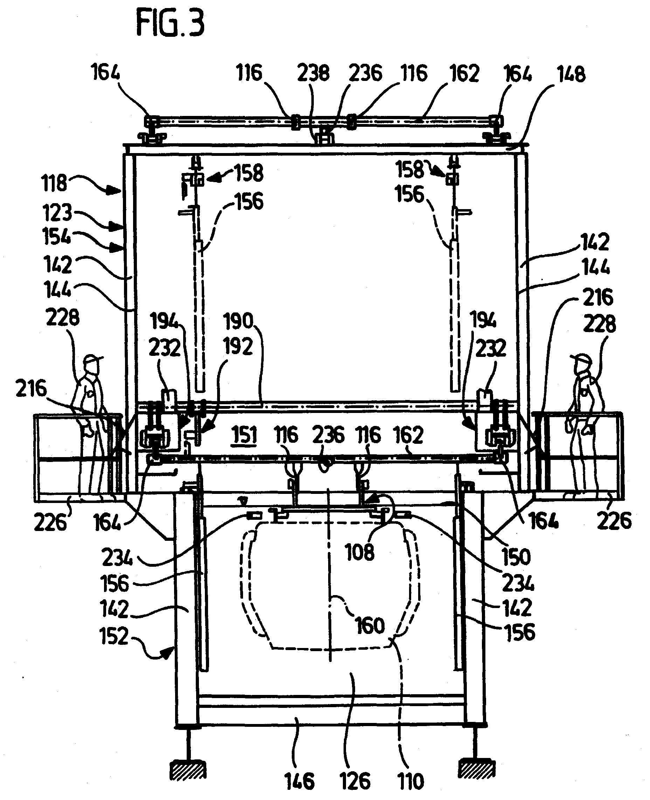

Anhand der Fig. 3 bis 6 wird im folgenden näher erläutert werden, auf welche Weise die Pendel 116 mit dem Fördermittel 120 des Pendelförderers 118 verbunden sind und wie das Fördermittel 120 im einzelnen aufgebaut ist.

Die Fig. 3 zeigt einen Querschnitt durch die Kabine 123 des Pendelförderers 118, welcher ein zweisträngiges Fördermittel 120 aufweist, im Bereich des Behandlungsbadabschnittes 128.

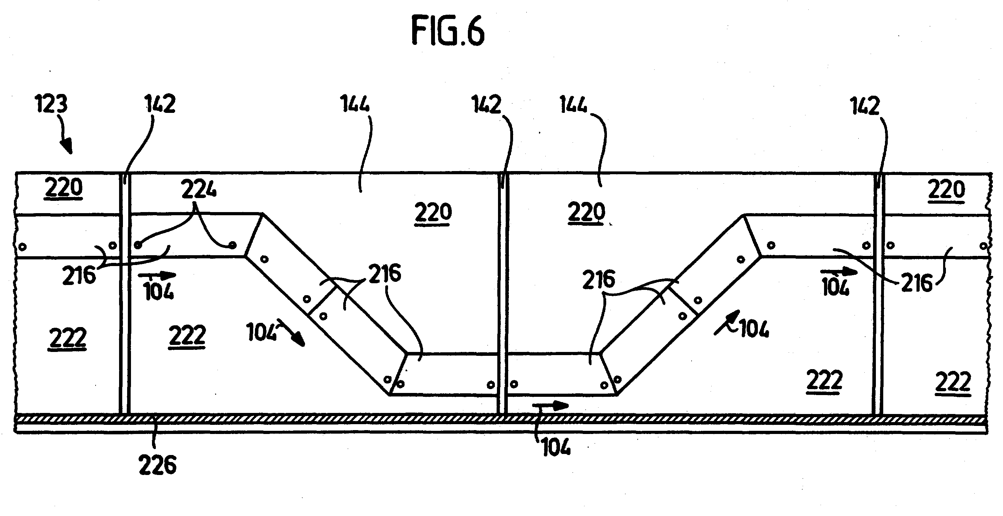

Die Kabine 123 umfaßt vertikale Stützträger 142, zwischen denen sich ebene, vertikale Seitenwände 144 erstrecken (siehe auch Fig. 6). Ferner ist die Kabine 123 nach unten durch eine Bodenwand 146 und nach oben durch eine Deckenwand 148 abgeschlossen.

Die Bodenwand 146 trägt das Behandlungsbad 126, dessen Flüssigkeitsspiegel mit 150 bezeichnet ist.

Das Behandlungsbad 126 ist in einem unteren Bereich 152 der Kabine 123 untergebracht, welcher eine geringere Breite aufweist als der obere Bereich 154 der Kabine 123.

Der Innenraum 151 der Kabine 123, in dem das Behandlungsbad 126 untergebracht ist, bildet einen Behandlungsbereich der Kabine 123.

Der Boden des Behandlungsbades 126 ist leicht geneigt, um ein vollständiges Abfließen der Badflüssigkeit zu einer Abflußöffnung für Reinigungs- und Wartungszwecke zu ermöglichen.

Das in Fig. 3 dargestellte Behandlungsbad 126 ist ein kataphoretisches Tauchlackierbad. Längs beider Längsseiten des Behandlungsbades 126 sind Anoden 156 in das Behandlungsbad 126 eingetaucht, welche mittels Kettenzügen 158 zu Wartungszwecken aus dem Behandlungsbad 126 herausgehoben werden können. Die angehobene Stellung der Anoden 156 ist in Fig. 3 in gebrochenen Linien dargestellt.

Eine an einem Skidrahmen 108 eingehängte Fahrzeugkarosserie 110 in Kopfüberstellung ist in das Flüssigkeitsbad 126 eingetaucht.

Jeder Skidrahmen 108 ist in jeweils vier Pendel 116 des Pendelförderers 118 eingehängt.

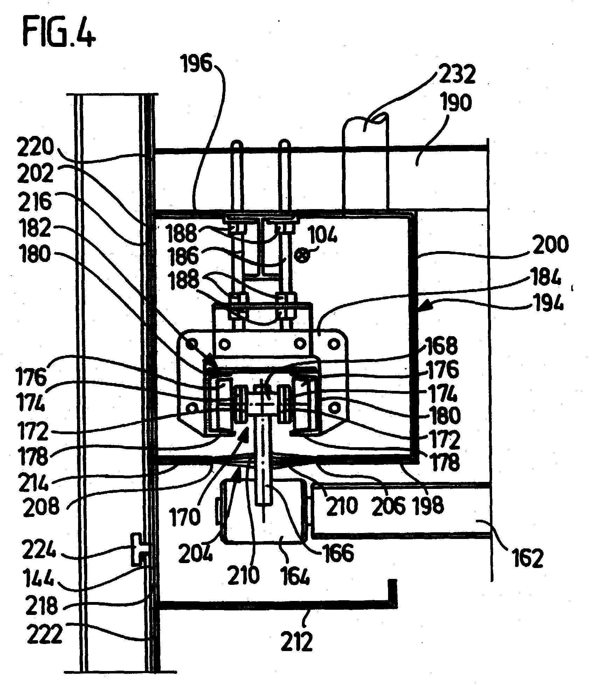

Wie aus Fig. 3 zu ersehen ist, sind jeweils zwei zu einer Mittelebene 160 der Kabine 123 symmetrisch angeordnete Pendel 116 an einer gemeinsamen Pendelquertraverse 162 festgelegt, welche an ihren beiden Enden an jeweils einer Lagerhülse 164 schwenkbar gelagert ist (Fig. 4).

Jede der Lagerhülsen 164 ist über jeweils eine Haltestange 166 an jeweils einem Verbindungsglied 168 gehalten, welches mit einer Förderkette 170 starr verbunden ist, die sich aus in der Förderrichtung 104 aufeinanderfolgenden innenliegenden Kettenlaschen 172 und außenliegenden Kettenlaschen 174 zusammensetzt. Die Kettenlaschen 172 und 174 sind jeweils paarweise quer zur Förderrichtung 104 voneinander beabstandet angeordnet. Längs der Förderrichtung 104 aufeinanderfolgende Kettenlaschen sind in einer vertikalen Ebene schwenkbar gelenkig miteinander verbunden, so daß die Förderkette 170 Bögen in dieser vertikalen Ebene beschreiben kann.

Die starr mit der Förderkette 170 verbundenen Verbindungsglieder 168 sind stets senkrecht zur Förderrichtung 104 ausgerichtet; die Pendel 116 sind aufgrund der schwenkbaren Lagerung der Pendelquertraversen 162 an den Lagerhülsen 164 auch in schrägen Förderabschnitten stets vertikal ausgerichtet.

Die beiden seitlich über die Kettenlaschen der Förderkette 170 vorstehenden Enden jedes Verbindungsglieds 168 tragen jeweils eine Führungsrolle 176.

Die Führungsrollen 176 rollen auf den unteren Führungsschenkeln 178 zweier Führungs-Profilschienen 180 ab, welche sich längs der Förderrichtung 104 erstrecken und im wesentlichen C-förmige Querschnitte aufweisen, deren offene Seiten einander zugewandt sind.

Die beiden Führungs-Profilschienen 180 bilden zusammen eine Kettenführungsbahn 182, längs welcher sich die Führungsrollen 176, die Verbindungsglieder 168 mit den Lagerhülsen 164 und die daran schwenkbar gelagerten Pendel 116 fortbewegen.

Die Fortbewegung der Führungsrollen 176 wird dabei durch die in an sich bekannter Weise angetriebene Führungskette 170 bewirkt.

Die beiden die Kettenführungsbahn 182 bildenden Führungs-Profilschienen 180 sind an längs der Förderrichtung 104 in regelmäßigen Abständen aufeinanderfolgenden Aufhängungsklammern 184 festgelegt, welche mittels jeweils zweier Gewindestäbe 186 und auf denselben angeordneter Muttern 188 höhenverstellbar an Aufhängungsquertraversen 190 gehalten sind, welche sich quer zur Förderrichtung 104 zwischen den vertikalen Seitenwänden 144 durch die Kabine 123 erstrecken.

An den Aufhängungsquertraversen 190 sind ferner Kontaktierungselemente 192 (Fig. 3) angeordnet, welche mit den Pendelquertraversen 162 in elektrischem Kontakt stehen, um die Pendel 116 und somit die über die Skidrahmen 108 mit den Pendeln 116 elektrisch leitfähig verbundenen Fahrzeugkarosserien 110 auf das für die kataphoretische Tauchlackierung erforderliche Kathoden-Potential legen zu können.

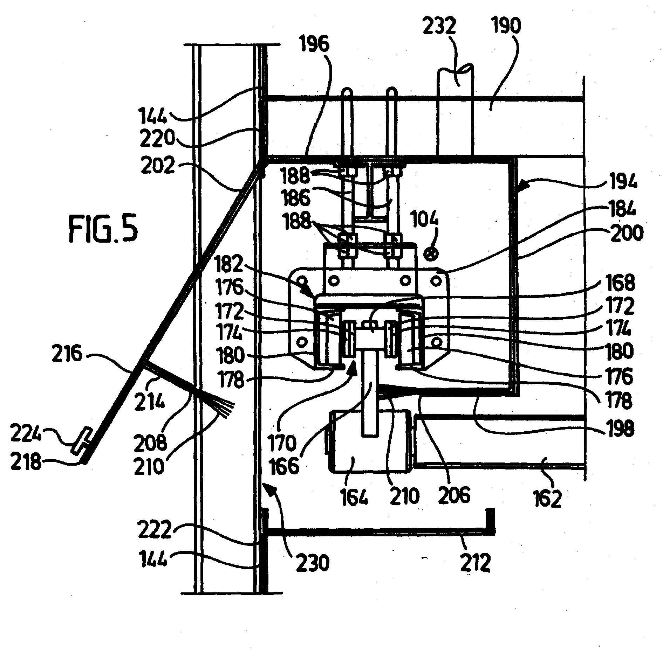

Wie insbesondere aus den Fig. 4 und 5 zu ersehen ist, verläuft jede der beiden Kettenführungsbahnen 182 innerhalb eines Fördermittelkanals 194, welcher einen im wesentlichen rechtwinkligen Querschnitt aufweist und nach oben durch eine Deckenwand 196, nach unten durch eine Bodenwand 198, zur Mittelebene 160 der Kabine 123 hin durch eine innere Seitenwand 200 und auf der der inneren Seitenwand 402 gegenüberliegenden Seite durch eine äußere Seitenwand 202 begrenzt ist.

Um den Durchtritt der Haltestangen 166 nach unten aus dem Fördermittelkanal 194 heraus zu ermöglichen, weist die Bodenwand 198 des Fördermittelkanals 194 einen längs der Förderrichtung 104 verlaufenden Längsschlitz 204 auf, von dessen innerem Rand 206 und von dessen äußerem Rand 208 sich jeweils Bürsten 210 zur Mitte des Längsschlitzes 204 hin erstrecken, um einen Durchtritt von Schmutzpartikeln, beispielsweise von an der Förderkette 170 oder den Führungsrollen 176 abgeriebenen Partikeln, aus dem Innenraum des Fördermittelkanals 194 in den Innenraum der Kabine 123 zu verhindern.

Um trotz der Bürsten 210 durch den Längsschlitz 204 gelangte Schmutzpartikel aufzufangen, ist unterhalb des Längsechlitzes 204 eine sich längs der Förderrichtung 104 erstreckende Schmutzauffangwanne 212 an der vertikalen Seitenwand 144 der Kabine 123 angeordnet.

Wie am besten aus Fig. 5 zu ersehen ist, bilden die äußere Seitenwand 202 des Fördermittelkanals 194 und der zwischen der äußeren Seitenwand 202 und dem äußeren Rand 208 des Längsschlitzes 204 angeordnete Bereich 214 der Bodenwand 198 des Fördermittelkanals 194 Bestandteile einer Wartungeklappe 216, die auf Höhe der Deckenwand 196 des Fördermittelkanals 194 mittels eines (nicht dargestellten) Scharniere um eine horizontale Schwenkachse schwenkbar gehalten ist.

Von dem Bereich 214 der Bodenwand 198 des Fördermittelkanals 194 erstreckt sich die Wartungeklappe 216 weiter nach unten bis zu einem knapp oberhalb der Schmutzauffangwanne 212 angeordneten unteren Rand 218.

Die Wartungsklappe 216 bildet einen Bestandteil der vertikalen Seitenwand 144 der Kabine 123 und fluchtet in ihrem (in Fig. 4 dargestellten) geschlossenen Zustand mit einem oberen Bereich 220 der vertikalen Seitenwand 144, welcher sich nach oben hin an die Wartungsklappe 216 anschließt, und mit einem unteren Bereich 222 der vertikalen Seitenwand 144, welcher sich nach unten an die Wartungsklappe 216 anschließt.

Wie am besten aus Fig. 6 zu ersehen ist, schließen sich längs der Förderrichtung 104 mehrere Wartungsklappen 216 aneinander an, von denen sich jede längs der Förderrichtung 104 über eine Länge von ungefähr zwei Metern erstreckt. Dadurch ist gewährleistet, daß das Gewicht einer einzelnen Wartungsklappe 216 nicht zu groß wird, um die Wartungsklappe 216 manuell von einer Bedienungsperson anheben zu lassen. Um die Wartungsklappen 216 anheben zu können, ist jede derselben mit zwei Betätigungsgriffen 224 versehen.

Wie aus den Fig. 3 und 6 zu ersehen ist, sind an den Außenseiten der vertikalen Seitenwände 144 der Kabine 123 begehbare Wartungsstege 226 angeordnet, auf denen Bedienungspersonen 228 zu den Wartungsklappen 216 gelangen können.

Wie aus Fig. 5 zu ersehen ist, gibt jede Wartungeklappe 216 im geöffneten Zustand eine Wartungsöffnung 230 in der vertikalen Seitenwand 144 der Kabine 123 frei und ermöglicht so den freien Zugang zum Innenraum des jeweiligen Fördermittelkanals 194, um Wartungs- und Reinigungsarbeiten an der im Fördermittelkanal 194 befindlichen Kettenführungsbahn 182 durchführen zu können.

Ferner können bei geöffneter Wartungsklappe 216 die Bürsten 210 gesäubert oder ausgetauscht werden und die Schmutzauffangwanne 212 entleert und gereinigt werden.

Um ein Eindringen von aggressiven chemischen Stoffen, beispielsweise von Fluoriden, aus dem Behandlungsbad 126 in den Fördermittelkanal 194 zu verhindern, ist eine Druckluftzufuhr zu dem Fördermittelkanal 194 vorgesehen, welche ein in der Deckenwand 196 des Fördermittelkanals 194 mündendes Druckluftzuführrohr 232 umfaßt.

Durch über das Druckluftzuführrohr 232 unter Überdruck zugeführte Luft kann der Innenraum des Fördermittelkanals 194 unter einen gegenüber dem Innendruck der Kabine 123 erhöhten Druck gesetzt werden, so daß ein stetiger Luftstrom aus dem Fördermittelkanal 194 durch den Längsschlitz 204 in den Innenraum der Kabine 123 erzeugt wird, welcher ein Eindringen aggressiver chemischer Stoffe aus dem Innenraum der Kabine 123 in den Fördermittelkanal 194 verhindert.

Dadurch ist es möglich, die im Innern des Fördermittelkanals 194 angeordneten Bauelemente, insbesondere die Kettenführungsbahn 182, die Führungsrollen 176 und die Aufhängungsklammern 184 aus gewöhnlichem Stahl herzustellen, welcher keine besondere Widerstandsfähigkeit gegenüber aggressiven chemischen Substanzen aufweisen muß.

Wie aus Fig. 3 zu ersehen ist, sind in dem Behandlungsbad 126 knapp unterhalb des Behandlungsbadspiegels 150 zu beiden Seiten der Mittelebene 160 Schwelleranoden 234 angeordnet, welche dazu erforderlich sind, bei der kataphoretischen Tauchlackierung eine ausreichende Beschichtungsdicke im Bereich der Bodengruppen 173 der Fahrzeugkarosserien 110 zu erzielen.

Da die Fahrzeugkarosserien 110 in Kopfüberstellung durch das Behandlungsbad 126 gefördert werden, können die Schwelleranoden 234 oberhalb der Bahn der Fahrzeugkarosserien 110 nahe des Behandlungsbadspiegels 150 angeordnet werden, wo sie für Wartungszwecke zugänglich sind, ohne daß die Flüssigkeit aus dem Behandlungsbad 126 abgelassen werden muß.

Wie ferner aus Fig. 3 zu ersehen ist, verläuft das Rücklauftrum 138 des Fördermittels 120 des Pendelförderers 118 oberhalb der Deckenwand 148 der Kabine 123. Die Pendelquertraversen 162 werden somit über das Dach der Kabine 123 zurückgefördert, wobei die an den Pendelquertraversen 162 angeordneten Pendel 116 in horizontaler Ausrichtung transportiert werden und sich die Pendelquertraversen 162 mit jeweils einer mittig angeordneten Abstützrolle 236 an einem in Längsrichtung des Daches der Kabine 123 verlaufenden Stützprofil 238 abstützen.

## Patentansprüche

1. Fördervorrichtung zum Fördern von Werkstücken, insbesondere Fahrzeugkarosserien (110), durch einen in einer Kabine (123) mit äußeren Begrenzungswänden angeordneten Behandlungsbereich zur Oberflächenbehandlung der Werkstücke, umfassend mindestens einen in der Kabine (123) angeordneten Fördermittelkanal (194), dessen Innenraum durch Begrenzungswände (196, 198, 200, 202) von dem Behandlungsbereich getrennt ist, und einen sich durch den Fördermittelkanal (194) erstreckenden Strang eines Fördermittels (120), dadurch gekennzeichnet, daß ein Bereich einer äußeren Begrenzungswand der Kabine (123) eine verschließbare Wartungsöffnung (230) aufweist, durch welche im geöffneten Zustand der Zugang zum Innenraum des Fördermittelkanals (194) von außerhalb der Kabine (123) möglich ist.

2. Fördervorrichtung nach Anspruch 1, dadurch gekennzeichnet, daß der Bereich der äußeren Begrenzungewand der Kabine (123) ein Bereich einer vertikalen Seitenwand (144) der Kabine (123) ist.

3. Fördervorrichtung nach einem der Ansprüche 1 oder 2, dadurch gekennzeichnet, daß die Wartungsöffnung (230) mittels eines Wartungsdeckels verschließbar ist.

4. Fördervorrichtung nach Anspruch 3, dadurch gekennzeichnet, daß der Wartungsdeckel als schwenkbar gehaltene Wartungsklappe (216) ausgebildet ist.

5. Fördervorrichtung nach einem der Ansprüche 3 oder 4, dadurch gekennzeichnet, daß der Wartungsdeckel einen Bereich einer Begrenzungewand des Fördermittelkanals (194) umfaßt.

6. Fördervorrichtung nach Anspruch 5, dadurch gekennzeichnet, daß der Wartungsdeckel einen Bereich einer vertikalen Seitenwand (202) des Fördermittelkanals (194) umfaßt.

7. Fördervorrichtung nach Anspruch 6, dadurch gekennzeichnet, daß der Wartungsdeckel eine vertikale Seitenwand (202) des Fördermittelkanals (194) umfaßt.

8. Fördervorrichtung nach einem der Ansprüche 3 bis 7, dadurch gekennzeichnet, daß der Wartungsdeckel einen einer Durchtrittsöffnung (204) des Fördermittelkanals (194) benachbarten Bereich einer Begrenzungswand des Fördermittelkanals (194) umfaßt.

9. Fördervorrichtung nach Anspruch 8, dadurch gekennzeichnet, daß an dem Wartungsdeckel Mittel (210) zum zumindest teilweisen Überdecken der Durchtrittsöffnung (204) angeordnet sind.

10. Fördervorrichtung nach einem der Ansprüche 1 bis 9, dadurch gekennzeichnet, daß die Wartungsöffnung (230) im geöffneten Zustand den Zugang zu einer unterhalb des Fördermittelkanals (194) angeordneten Schmutzauffangwanne (212) ermöglicht.

11. Fördervorrichtung nach Anspruch 10, dadurch gekennzeichnet, daß ein unterer Rand der Wartungsöffnung (230) zwischen einem unteren Rand des Fördermittelkanals (194) und der Schmutzauffangwanne (212) verläuft.

12. Fördervorrichtung nach einem der Ansprüche 1 bis 11, dadurch gekennzeichnet, daß ein sich an die Wartungsöffnung (230) nach oben anschließender Bereich (220) einer äußeren Begrenzungswand der Kabine (123) und ein sich nach unten an die Wartungsöffnung (230) anschließender Bereich (222) der äußeren Begrenzungswand der Kabine (123) im geschlossenen Zustand mit dem Wartungsdeckel fluchten.

13. Fördervorrichtung nach einem der Ansprüche 1 bis 12, dadurch gekennzeichnet, daß mehrere Wartungsöffnungen (230) vorgesehen sind, die in einer äußeren Begrenzungswand der Kabine (123) längs der Förderrichtung (104) aufeinanderfolgen.

14. Fördervorrichtung nach Anspruch 13, dadurch gekennzeichnet, daß die mehreren Wartungsöffnungen (230) sich längs der Förderrichtung (104) unmittelbar aneinander anschließen.

15. Fördervorrichtung nach Anspruch 14, dadurch gekennzeichnet, daß sich die unmittelbar aneinander anschließenden Wartungsöffnungen (230) längs der Förderrichtung (104) über im wesentlichen die gesamte Länge des Fördermittelkanals (194) erstrecken.

16. Fördervorrichtung nach einem der Ansprüche 1 bis 15, dadurch gekennzeichnet, daß der Innenraum des Fördermittelkanals (194) mit einem gegenüber dem Luftdruck des Behandlungsbereichs erhöhten Luftdruck beaufschlagbar ist.

17. Fördervorrichtung nach einem der Ansprüche 1 bis 16, dadurch gekennzeichnet, daß an der Außenseite der Kabine (123) unterhalb der Wartungsöffnung (230) ein begehbarer Wartungssteg (226) angeordnet ist.

18. Fördervorrichtung nach einem der Ansprüche 1 bis 17, dadurch gekennzeichnet, daß die Fördervorrichtung (102) mindestens zwei in der Kabine (123) angeordnete Fördermittelkanäle (194) umfaßt, durch welche sich jeweils ein Strang des Fördermittels (120) erstreckt, und daß mindestens zwei Bereiche der äußeren Begrenzungswände der Kabine (123) jeweils mindestens eine verschließbare Wartungsöffnung (230) aufweisen, durch welche im geöffneten Zustand der Zugang zum Innenraum jeweils eines der Fördermittelkanäle (194) von außerhalb der Kabine (123) möglich ist.

19. Behandlungsvorrichtung zur Oberflächenbehandlung von Werkstücken, insbesondere Fahrzeugkarosserien (110), umfassend eine Fördervorrichtung zum Fördern der Werkstücke durch einen in einer Kabine (123) mit äußeren Begrenzungswänden angeordneten Behandlungsbereich zur Oberflächenbehandlung der Werkstücke nach einem der Ansprüche 1 bis 18.
